# DEMANDE DE BREVET EUROPEEN

(11) **EP 0 881 706 A1**
(43) Date de publication de la demande: **02.12.1998**
(21) Numéro de dépôt: 98401036.3
(22) Date de dépôt: 28.04.1998
(51) Int. Cl.: H01Q 25/02, G01S 13/44

(54) **Source à deux voies pour antenne à optique focalisante**

(30) Priorité: 29.04.1997 FR 9705257
(71) Demandeur: THOMSON-CSF, 75008 Paris (FR)
(72) Inventeur: Delestre, Xavier, THomson-CSF Prop. Intel., 94117 Arcueil Cedex (FR); Dousset, Thierry, Thomson-CSF Prop. Intel., 94117 Arcueil Cedex (FR)
(74) Mandataire: Albert, Claude

(57) **Abrégé**

L'invention concerne une source à deux voies, dite monopulse, pour antenne à optique focalisante

La source comporte au moins deux éléments rayonnants (41, 42) et un guide d'onde rectangulaire (43), les éléments rayonnants (41, 42) étant placés à l'extrémité du guide d'onde (43), le guide d'onde (43) étant dimensionné pour permettre la propagation des modes TE10 et TE20, les rayonnements des éléments rayonnants (41, 42) étant combinés pour générer soit le mode TE10, soit le mode TE20.

Application : notamment source alimentée par un circuit en technologie microstrip éclairant des antennes à réflecteurs.

## Description

La présente invention concerne une source primaire à au moins deux voies, dite monopulse, alimentée par exemple par un circuit en technologie micro-ruban pour des antennes à optique focalisante et notamment pour des antennes à optique repliée, telles que par exemple des antennes à réflecteur de type cassegrain. Elle s'applique notamment aux radars du domaine millimétrique, par exemple pour des radars équipant des automobiles.

Dans le cas d'une antenne à réflecteur fonctionnant dans le domaine millimétrique, c'est-à-dire par exemple à des fréquences comprises entre 5 et 100 Ghz, et notamment dans le cas des antennes à optique repliée, la source primaire est disposée derrière le réflecteur principal et rayonne à travers une ouverture pratiquée dans ce dernier.

Les nouveaux substrats diélectriques peuvent être maintenant fournis avec de très fines épaisseurs de métallisation, de moins de 10 µm par exemple, ce qui permet de réaliser en technologie à micro-ruban, dite encore microstrip, des circuits d'émission et de réception fonctionnant jusqu'aux bandes millimétriques. Néanmoins, les pertes élevées, de l'ordre notamment de 80 dB par mètre, présentées par une ligne en technologie microstrip obligent à ces fréquences à compacter au maximum les circuits et notamment à disposer la source primaire au plus près du circuit d'émission et de réception hyperfréquence, et cela afin de diminuer le plus possible les longueurs de lignes.

Par ailleurs, les diagrammes de rayonnement de la source primaire, disposée derrière le réflecteur principal de l'antenne, par exemple un réflecteur parabolique, ne doivent pas être altérés par les effets de l'ouverture pratiquée dans ce dernier. En outre, cette ouverture doit avoir des dimensions les plus faibles possibles car elle se comporte comme un masque pour le réflecteur principal.

Plusieurs solutions sont connues pour réaliser une source primaire à deux voies, une voie somme et une voie différence, alimentée par un circuit en technologie microstrip.

Une première solution consiste à utiliser une source en guide d'onde rectangulaire et à alimenter ces deux voies par l'intermédiaire de transitions entre le guide et des lignes microstrip. Cette solution en guide d'onde présente l'avantage de s'intégrer facilement dans une antenne à optique repliée car il est possible de positionner l'embouchure du cornet pyramidal de la source primaire à la base du réflecteur principal. En revanche, l'encombrement en profondeur de l'ensemble constitué de la source primaire et du circuit microstrip est très importante et les transitions entre le guide et les lignes microstrip introduisent des pertes de transmission non négligeables. De plus, cette solution est coûteuse du fait de la complexité des pièces mécaniques à réaliser telles que notamment le cornet, le té magique et les transitions guide-lignes microstrip.

Une deuxième solution consiste à réaliser une source imprimée en technologie microstrip et gravée sur le même substrat que le circuit d'émission et de réception hyperfréquence. Cette source est composée de deux alignements d'éléments rayonnants, par exemple des pièces, ou pavés, ou « patches » rectangulaires, disposés en regard d'un trou réalisé dans le réflecteur principal. Cette solution présente l'avantage de ne nécessiter aucune pièce mécanique mais convient mal à une antenne à optique repliée. En effet, les diagrammes de rayonnement de cette source sont très sensibles aux dimensions et à la position relative de l'ouverture pratiquée dans le réflecteur principal. Il est également nécessaire d'éloigner les composants actifs du circuit d'émission et de réception hyperfréquence si on souhaite disposer le réflecteur principal au plus près de la surface du circuit microstrip.

L'invention a pour but de pallier les inconvénients précités, elle permet notamment de réaliser une source à deux voies susceptible d'être positionnée au plus près du circuit d'émission et de réception hyperfréquence et adaptée à une structure d'antenne à optique repliée. A cet effet l'invention a pour objet une source à deux voies pour antenne à optique focalisante, caractérisée en ce qu'elle comporte au moins deux éléments rayonnants et un guide d'onde rectangulaire, les éléments rayonnants étant placés à l'extrémité du guide d'onde , le guide d'onde étant dimensionné pour permettre la propagation des modes TE10 et TE20, les rayonnements des éléments rayonnants étant combinés pour générer soit le mode TE10, soit le mode TE20.

L'invention a pour principaux avantages de permettre un accès à la source par des lignes microstrip, de permettre l'obtention des diagrammes de rayonnement indépendants de la position du réflecteur principal dans le cas d'application à une antenne à optique repliée, de permettre l'obtention de faibles fuites hyperfréquence, de permettre la protection du circuit d'émission et de réception hyperfréquence contre des rayonnements parasites extérieurs situés en dehors de la bande de fonctionnement du radar, et d'être simple à mettre en oeuvre puisqu'elle ne nécessite notamment pas de procédés de fabrication spéciaux.

D'autres caractéristiques et avantages de l'invention apparaîtront à l'aide de la description qui suit faite en regard de dessins annexés qui représentent :
- la figure 1, un exemple d'antenne à optique repliée alimentée par une source primaire monopulse ;
- la figure 2, un exemple de réalisation selon l'art antérieur d'une source primaire ;
- la figures 3, un autre exemple selon l'art antérieur d'une source primaire ;
- la figure 4, un mode réalisation possible d'un exemple de source selon l'invention ;
- la figure 5, une vue suivant F de la figure 4.

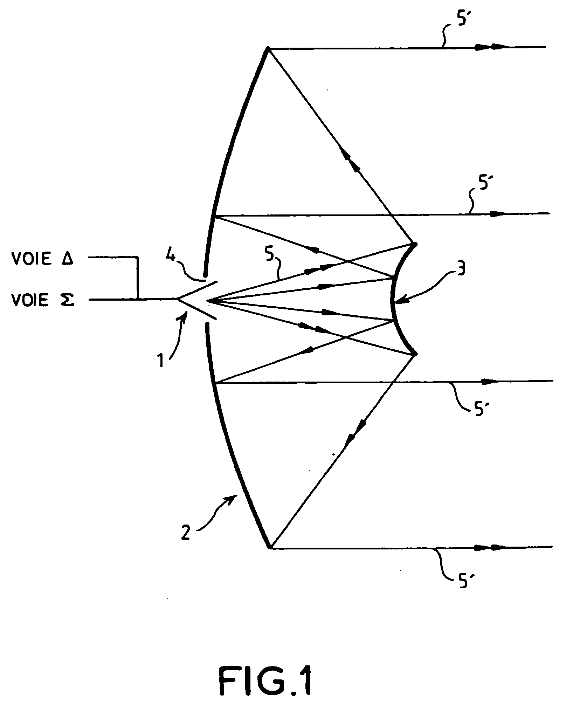

La figure 1 présente un exemple d'antenne à optique repliée alimentée par une source primaire 1 dite monopulse, c'est-à-dire une source à deux voies, une voie somme Σ et une voie différence Δ. L'antenne comporte notamment un réflecteur principal 2, par exemple de type parabolique, et un sous-réflecteur 3. La source primaire 1 est disposée derrière le réflecteur principal 2 et rayonne à travers un trou 4 réalisé dans ce dernier. Le sous-réflecteur 3 est disposé en regard de la source primaire 1. Les ondes 5 émises depuis la source primaire 1 se réfléchissent sur le sous-réflecteur 3 puis sur le réflecteur principal 2. Après réflexion sur ce dernier, les ondes 5' sont émises parallèlement en sortie d'antenne. Comme il a été indiqué précédemment, les diagrammes de rayonnement de la source primaire 1, disposée derrière le réflecteur principal 2 de l'antenne ne doivent pas être altérés par les effets de l'ouverture 4 pratiquée dans ce dernier. En outre, cette ouverture doit avoir des dimensions les plus faibles possibles car elle se comporte comme un masque pour le réflecteur principal.

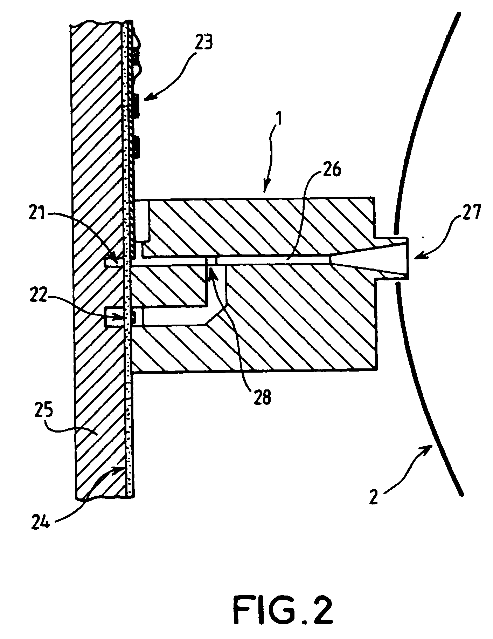

La figure 2 présente un exemple de réalisation selon l'art antérieur. La source primaire 1 utilise un guide d'onde rectangulaire 26. Les voies somme et différence du té magique 28 sont alimentées par l'intermédiaire de transitions guide-microstrip 21, 22. Les circuits d'émission et de réceptions 23, en technologie microstrip, sont quant à eux implantés sur un substrat diélectrique 24, lui-même par exemple disposé sur une semelle métallique 25. Cette solution a comme avantage qu'elle s'intègre facilement à une antenne à optique repliée car il est possible de positionner l'embouchure du cornet pyramidal 27 de la source à la base du réflecteur principal 2 de l'antenne. Un inconvénient majeur de cette solution est cependant l'encombrement important en profondeur de l'ensemble constitué de la source 1 et des circuits microstrip 23, 24, 25. Par ailleurs, les transitions 21, 22 entre le guide et les circuits microstrip induisent des pertes non négligeables. Enfin, cette solution est coûteuse à cause de la complexité des pièces mécaniques à réaliser telles que notamment le cornet 27, un té magique 28 et les transitions guide-lignes microstrip 21, 22.

La figues 3 présente une autre solution. La source primaire est imprimée en technologie microstrip et gravée sur le même substrat diélectrique 24 que les circuits d'émission et de réception 23. Cette source est par exemple constituée de deux alignements d'éléments rayonnant 31. Ces éléments rayonnant sont disposés en regard du trou 4 réalisé dans le réflecteur principal 2. Cette solution présente l'avantage de ne nécessiter aucune pièce mécanique mais convient mal à une antenne à optique repliée dans la mesure notamment où les diagrammes de rayonnement de cette source sont très sensibles aux dimensions et à la position relative de l'ouverture 4 pratiquée dans le réflecteur principal 2. Par ailleurs, il est également nécessaire d'éloigner les composants actifs du circuit d'émission et de réception hyperfréquence pour disposer le réflecteur principal au plus près de la surface du circuit microstrip.

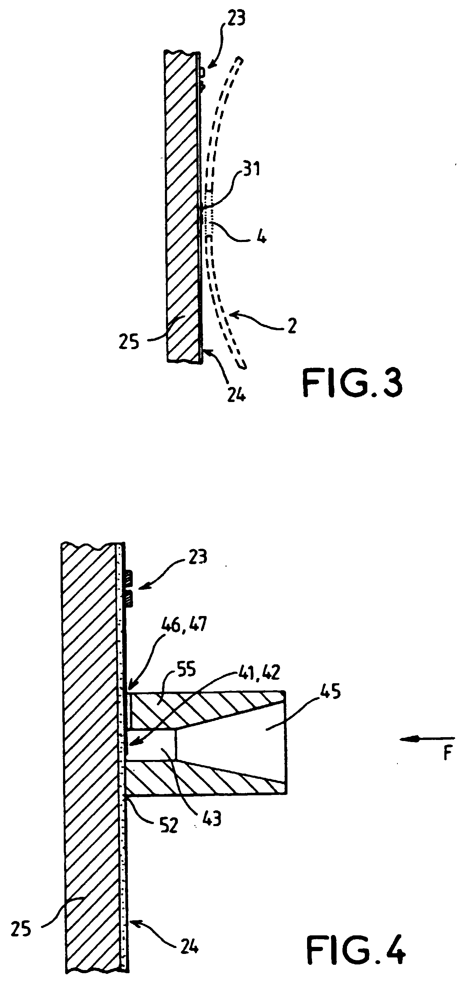

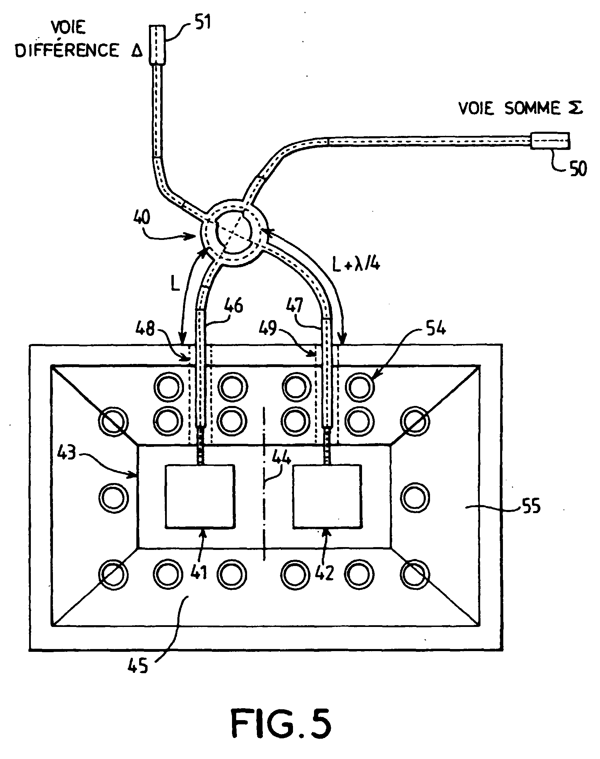

Les figures 4 et 5 présentent un exemple de réalisation possible d'une source selon l'invention. Les circuits hyperfréquence en technologie microstrip 23 étant toujours implantés sur un substrat diélectrique 24, lui-même placé par exemple sur une semelle métallique 25, la source comporte aux moins deux éléments rayonnant 41, 42 réalisés en technologie microstrip, par exemple disposés et gravés dans le même plan, notamment sur le même substrat diélectrique 24 que celui qui contient les circuits hyperfréquences 23. Les éléments rayonnant 41, 42 sont placés à l'extrémité d'un guide d'onde rectangulaire 43 qui vient par exemple en butée sur le substrat diélectrique de telle façon que les éléments 41, 42 soient isolés en rayonnement du circuit d'émission et de réception 23, ce dernier 23 étant placé à l'extérieur du guide 43. Les composants actifs du circuit d'émission et de réception 23 peuvent ainsi être placés à proximité de la source, ce qui permet notamment de limiter les pertes hyperfréquence. Le guide d'onde 43 est par exemple appliqué sur la surface du substrat diélectrique 24, la semelle métallique 25 sur laquelle est monté ce substrat diélectrique assurant la rigidité mécanique de ce dernier. Les deux éléments rayonnant 41,42 sont par exemple alimentés par des lignes microstrip 46,47 qui traversent la paroi du guide d'onde 43 par exemple par deux tunnels 48, 49, un premier tunnel 48 étant affecté à la ligne 46 alimentant le premier élément rayonnant 41 et un deuxième tunnel étant affecté à la ligne 47 alimentant le deuxième élément rayonnant 42. Ces deux lignes microstrip 46,47 sont par exemple reliées aux sorties d'un anneau hybride 40 équilibré de type 4λ/4 dont l'une des sorties est allongée d'un quart de longueur d'onde λ/4 par rapport à l'autre pour permettre l'alimentation en phase ou en opposition de phase des éléments rayonnants 41,42 suivant l'entrée 50, 51 de l'anneau 40 qui est excitée. Avantageusement, la protection électromagnétique, c'est-à-dire notamment la protection du circuit d'émission et de réception contre les rayonnements parasites extérieurs situés en dehors de la bande de fonctionnement du radar, est assurée par la présence du guide d'onde rectangulaire 43 qui joue le rôle de filtre passe-haut.

Le guide d'onde rectangulaire 43 est dimensionné pour permettre la propagation des modes transverses électriques TE10 et TE20. Les rayonnements des éléments rayonnants 41, 42 sont combinés pour générer soit le mode TE10, soit le mode TE20. A cet effet, l'alimentation des éléments rayonnants est par exemple telle que le champ électrique rayonné par ces derniers est parallèle au petit coté du guide et l'axe médian 44 des éléments rayonnants passe sensiblement à la moitié du grand côté du guide. Selon l'invention, la combinaison des rayonnements des deux éléments 41, 42 est utilisée pour générer soit mode TE10, soit le mode TE20 à l'intérieur du guide d'onde 43. Une alimentation en phase ou en opposition de phase des deux éléments rayonnants 41, 42 avec des amplitudes identiques permet de générer respectivement les modes TE10 et TE20 dans le guide d'onde 43. L'autre extrémité du guide d'onde est reliée à un cornet pyramidal 45 constituant l'embouchure rayonnante de la source. Ce cornet peut par exemple être placé à la base du réflecteur principal 2 d'une antenne repliée. La source rayonne un diagramme somme Σ dans les plans électrique E et magnétique H pour une alimentation du guide 43 en mode TE10, mode pair, et un diagramme différence Δ dans le plan magnétique H avec le mode TE20, mode impair. Le mode TE10 est par exemple généré lorsqu'une entrée 50 de l'anneau hybride 40 est excitée et le mode TE20 est par exemple généré lorsque l'autre entrée 51 de l'anneau est excitée. Avantageusement, les diagrammes de rayonnement sont indépendants de la position du réflecteur principal. En effet, les diagrammes de rayonnement dépendent essentiellement des dimensions de l'ouverture du cornet pyramidal 45. Par ailleurs, la longueur mécanique du guide d'onde 43 et du cornet 45 permet d'éloigner le réflecteur principal du circuit d'émission et de réception 23, ce qui élimine notamment tout risque de perturbation de fonctionnement de ce dernier.

L'assemblage et le positionnement relatif du guide d'onde 43 par rapport à la semelle 25 du substrat diélectrique 24 peuvent être effectués par un procédé quelconque tel que par exemple un vissage, un brasage ou un collage. Avantageusement, le plan de pose 52 du guide d'onde 43 peut être relié électriquement au moins en un point, et de préférence en plusieurs, avec la semelle 25 du substrat diélectrique 24 afin de minimiser le niveau des fuites hyperfréquence. A cet effet, pour obtenir de faibles fuites, par exemple inférieures à 20 dB, des trous métallisés 54 peuvent être réalisés à travers le substrat diélectrique 24. Des trous correspondant peuvent alors être réalisés dans la semelle 25, celle-ci étant métallique, et des filetages correspondant peuvent par exemple être réalisés dans les parois 55 du guide d'onde 43 depuis son plan de base 52 afin de fixer par vissage l'ensemble constitué de la semelle 25 et du substrat diélectrique 24 sur le plan de base du guide d'onde.

La longueur et la largeur des éléments rayonnants 41, 42 sont par exemple déterminées pour obtenir une impédance d'entrée réelle à la fréquence centrale de fonctionnement de la source. Des transformateurs d'impédance peuvent par exemple être insérés entre les éléments rayonnant et les sorties de l'anneau hybride.

L'invention peut par exemple être utilisée pour réaliser une source dite monopulse à trois voies, c'est à dire une source comportant une voie somme et une voie différence dans le plan du champ électrique E et une voie différence dans le plan du champ magnétique H. Il est alors nécessaire de placer quatre éléments rayonnant à l'extrémité du guide d'onde 43. Il est par ailleurs nécessaire de mettre en oeuvre un circuit pour former les voies somme et différence, ce circuit étant réalisé par exemple à base de quatre anneaux hybrides.

Les éléments rayonnants 41, 42 peuvent être rectangulaires, mais aussi de forme quelconque, ils peuvent être par exemple circulaires ou triangulaires. Ils peuvent par ailleurs être sous forme de simples pastilles, appelées encore selon l'expression anglo-saxonne « patches », ils peuvent être aussi superposés. Ce peut être aussi des fentes rayonnantes.

Au lieu d'exciter les éléments rayonnants par des lignes microstrip 48, 49 passant sous des tunnels 46, 47, il est possible de les exciter par des fentes ou des lignes coaxiales. Un tel mode de réalisation peut être envisagé pour des fréquences de fonctionnement allant par exemple jusqu'à 26 voire 40 Ghz. Cela permet par exemple de réaliser une source monopulse à partir d'un cornet pyramidal et d'un anneau hybride exteme.

L'invention peut s'appliquer non seulement à une source destinée à éclairer des antennes à optique repliée, comme dans le cas d'une antenne à réflecteur de type cassegrain par exemple, mais elle peut s'appliquer aussi à une source destinée à éclairer des antennes à optique directe, comme dans le cas d'une antenne à lentille diélectrique par exemple.

Enfin, l'invention est simple à mettre en oeuvre puisqu'elle ne nécessite notamment pas l'utilisation de procédés de fabrication spéciaux. L'invention est aussi particulièrement économique puiqu'elle ne nécessite qu'un petit nombre de pièces à assembler.

## Revendications

1. Source monopulse pour antenne à optique focalisante, caractérisée en ce qu'elle comporte au moins deux éléments rayonnants (41, 42) et un guide d'onde rectangulaire (43), les éléments rayonnants (41, 42) étant disposés sur un même substrat diélectrique (24) et placés à l'extrémité du guide d'onde (43), le guide d'onde (43) étant dimensionné pour permettre la propagation des modes transverses TE10 et TE20, les rayonnements des éléments rayonnants (41, 42) étant combinés pour générer soit le mode TE10, soit le mode TE20.

2. Source selon la revendication 1, caractérisée en ce que l'extrémité du guide d'onde (43) est appliquée contre la surface du diélectrique (24).

3. Source selon l'une quelconque des revendications précédentes, caractérisée en ce que le substrat diélectrique (24) comporte le circuit d'émission et de réception (23) placé à l'extérieur du guide d'onde (43).

4. Source selon l'une quelconque des revendications précédentes, caractérisée en ce que les éléments rayonnants (41, 42) sont en technologie à micro-ruban.

5. Source selon l'une quelconque des revendications 1 à 3, caractérisée en ce que les éléments rayonnant (41, 42) sont des fentes rayonnantes.

6. Source selon l'une quelconque des revendications précédentes, caractérisée en ce que les éléments rayonnant (41, 42) sont alimentés par des lignes microstrip (46, 47) qui traversent la paroi (55) du guide d'onde (43) par des tunnels (48,49).

7. Source selon l'une quelconque des revendications 1 à 5, caractérisée en ce que les éléments rayonnants (41, 42) sont alimentés par des fentes.

8. Source selon l'une quelconque des revendications 1 à 5, caractérisé en ce que les éléments rayonnants (41, 42) sont alimentés par des lignes coaxiales.

9. Source selon l'une quelconque des revendications précédentes, caractérisée en ce que l'alimentation des éléments rayonnants (41, 42) est telle que le champ électrique rayonné par ces derniers est parallèle au petit côté du guide d'onde (43) et en ce que l'axe médian (44) des éléments rayonnants passe sensiblement à la moitié du grand côté du guide d'onde (43), une alimentation en phase ou en opposition de phase des éléments rayonnants (41, 42) permettant de générer respectivement le mode TE10 et le mode TE20 dans le guide (43).

10. Source selon la revendication 9, caractérisée en ce que les éléments rayonnants (41, 42) sont reliés aux sorties d'un anneau hybride (40) équilibré 4λ/4 dont l'une des sorties est allongée d'un quart de longueur d'onde par rapport à l'autre pour permettre l'alimentation en phase ou en opposition de phase des éléments rayonnants suivant l'entrée (50, 51) de l'anneau (40) qui est alimentée.

11. Source selon l'une quelconque des revendications précédentes, caractérisée en ce que le substrat diélectrique (24) étant monté sur une semelle métallique (25), le plan de pose (52) est relié électriquement au moins en un point avec la semelle (25).

12. Source selon la revendication 11, caractérisée en ce que des trous métallisés étant réalisés à travers le substrat diélectrique (24), des trous correspondant sont réalisés dans la semelle (25) et des filetages correspondant sont réalisés dans les parois (55) du guide d'onde (43), l'ensembles constitué de la semelle (25) et du substrat diélectrique (24) étant fixé par vissage sur le guide (43).

13. Source selon l'une quelconque des revendications précédentes, caractérisée en ce que l'autre extrémité du guide d'onde est reliée à un cornet pyramidal (45) constituant l'embouchure de la source.

14. Source selon la revendication 13, caractérisée en ce que le cornet pyramidal est placé à la base du réflecteur principal (2) d'une antenne repliée.
